(19) Europäisches Patentamt
European Patent Office
Office européen des brevets

(11) **EP 1 873 556 B1**

(12) **FASCICULE DE BREVET EUROPEEN**

(45) Date de publication et mention
de la délivrance du brevet:
**23.04.2014 Bulletin 2014/17**

(21) Numéro de dépôt: **07111071.2**

(22) Date de dépôt: **26.06.2007**

(51) Int Cl.:
*G01S 17/42* (2006.01)       *G01S 17/48* (2006.01)
*G01S 17/74* (2006.01)       *G01S 17/89* (2006.01)
*B64G 1/10* (2006.01)       *B64G 1/36* (2006.01)

(54) **Système de métrologie lateral et longitudinal**

System zur Messung der Seiten- und Längsrichtung

Lateral and longitudinal metrology system

(84) Etats contractants désignés:
**AT BE BG CH CY CZ DE DK EE ES FI FR GB GR
HU IE IS IT LI LT LU LV MC MT NL PL PT RO SE
SI SK TR**

(30) Priorité: **27.06.2006 FR 0652673**

(43) Date de publication de la demande:
**02.01.2008 Bulletin 2008/01**

(73) Titulaire: **THALES
92200 Neuilly sur Seine (FR)**

(72) Inventeurs:
• **Napierala, Bruno
06110, LE CANNET (FR)**
• **Degrelle, Cyril
06210, MANDELIEU (FR)**
• **Leyre, Xavier
06650, OPIO (FR)**
• **Abadie, Suzanne
06150, CANNES LA BOCCA (FR)**

(74) Mandataire: **Lucas, Laurent Jacques
Marks & Clerk France
Conseils en Propriété Industrielle
Immeuble Visium
22, Avenue Aristide Briand
94117 Arcueil Cedex (FR)**

(56) Documents cités:
**WO-A-87/02797       US-A- 5 493 392**

• **X. LEYRE, M. SGHEDONI, F. ARBUSTI, P. ATTINA,
P. VON BALLMOOS: "Recent advances and low
cost concept for the gamma-ray lens project
MAX" EXPERIMENTAL ASTRONOMY, vol. 20,
décembre 2005 (2005-12), pages 455-464,
XP002422675**
• **A. WIELDERS, B. CALVEL, B. SWINKELS, P.
CHAPMAN: "Metrology concepts for a space
interferometer mission: SMART-2"
PROCEEDINGS OF THE SPIE, vol. 4852, février
2003 (2003-02), pages 268-278, XP002422676**
• **G.H. BLACKWOOD, S. DUBOVITSKY, R.P.
LINFIELD, P.W. GORHAM: "Interferometer
Instrument Design for New Millenium Deep Space
3", SPIE CONFERENCE ON ASTRONOMICAL
INTERFEROMETRY, vol. 3350, 24 March 1998
(1998-03-24), pages 183-194, XP007911214,
Hawaï, USA**

## Description

L'invention concerne un système de métrologie pour satellites permettant la localisation de satellites et notamment un système de métrologie permettant à des satellites de se localiser les uns par rapport aux autres. Un tel système est notamment applicable dans les systèmes de vols en formations de satellites désignés couramment dans la technique par la désignation "Free Flying".

L'invention concerne également un système de commande permettant de commander le déplacement et l'orientation d'un satellite secondaire par rapport à un satellite de référencé.

Elle est également applicable à un système d'égalisation de distances entre satellites.

## ETAT DE LA TECHNIQUE

Certains systèmes utilisent plusieurs satellites qui se déplacent de façon cohérente entre eux. C'est le cas par exemple, de système de télescopes haute énergie de nouvelle génération, dans lesquels la concentration des rayons lumineux se fait à l'aide de plusieurs satellites. Ces satellites doivent alors conserver des positions relatives les uns par rapport aux autres qui puissent être contrôlées. Pour cela, il est connu d'utiliser un système de métrologie tel que décrit notamment dans le document « Recent advances and low cost concept for the gamma-ray lens project MAX » EXPERIMENTAL ASTRONOMY, vol.20, décembre 2005, pages 455-464, XP002422675.

Dans un vol en formation composée de deux satellites, l'un peut-être considéré comme satellite "maître" ou satellite de référence, l'autre comme "esclave" ou satellite secondaire. Le satellite de référence pilote alors les déplacements du satellite secondaire en fonction de ses déplacements propres.

Le satellite de référence comporte des systèmes de suivi de trajectoire et constitue le satellite sur lequel s'alignent les autres satellites de la formation.

Le ou les satellites secondaires comportent des moyens de suivi de trajectoires et possèdent donc des moyens de propulsion et/ou d'orientation.

Par ailleurs, un vol en formation de plusieurs satellites en vue de réaliser une interférométrie à synthèse d'ouverture nécessite une connaissance fine de leurs positions relativement à un satellite de référence. Les connaissances de positionnements latéral et longitudinal sont respectivement de +/- 10 $\mu$m à 100 m et +/- 100 $\mu$m à 100 m.

L'interférométrie à synthèse d'ouverture nécessite une égalisation fine des distances entre chaque satellite secondaire et le satellite de référence. Cette égalisation dépend de la longueur de cohérence imposée par la largeur spectrale (filtrée ou non) de la source observée. Généralement, l'égalisation requise est nanométrique.

Les solutions actuellement connues comme l'utilisation d'une longueur d'onde synthétique (battement entre deux longueurs d'onde voisines) et la télémétrie laser font l'objet de systèmes embarqués très complexes et n'offrent pas la précision escomptée pour la télémétrie.

L'objet de l'invention est donc de résoudre ce problème.

## RESUME DE L'INVENTION

L'invention concerne donc un système de métrologie de satellites pour le vol en formation de satellites comprenant au moins un satellite de référence et un satellite secondaire. Le satellite de référence comporte:

- une source optique émettant un faisceau lumineux destiné à éclairer au moins en partie le satellite secondaire,
- un ensemble de détecteurs principal de lumière capables de détecter de la lumière provenant du satellite secondaire,
- un circuit de mesure permettant de détecter le ou les détecteurs qui reçoivent de la lumière du satellite secondaire,

De plus, le satellite secondaire comporte au moins un premier réflecteur qui reçoit la lumière reçue du satellite de référence et qui la réfléchit vers l'ensemble de détecteurs de lumière du satellite de référence.

Avantageusement, la source optique émet un faisceau lumineux divergent.

On prévoira alors une lentille de focalisation de sortie, la source optique étant située à une distance égale à deux fois la distance focale de la lentille.

Selon un mode de réalisation préféré de l'invention, ledit réflecteur est un rétro réflecteur.

Par ailleurs, l'invention prévoit que l'ensemble de détecteurs principal est une matrice de détecteurs. Cet ensemble de détecteurs comporte un premier détecteur nominal correspondant au point d'éclairement de l'ensemble de détecteurs lorsque le satellite secondaire est convenablement positionné par rapport au satellite de référence. Le circuit de mesure détecte la distance séparant ce détecteur nominal d'un détecteur éclairé par la lumière réfléchie par le satellite secondaire déterminant ainsi le décentrement latéral du satellite secondaire par rapport à sa position nominale.

Selon une autre forme de réalisation, le satellite secondaire comporte au moins trois réflecteurs chacun d'eux étant destiné à réfléchir la lumière provenant de la source optique vers l'ensemble de détecteurs principal du satellite de référence.

De préférence, on prévoira alors que le satellite secondaire comporte un deuxième, un troisième, un quatrième et un cinquième réflecteurs, chacun d'eux étant destiné à réfléchir la lumière provenant de la source optique vers l'ensemble de détecteurs principal du satellite de référence.

Avantageusement, lesdits réflecteurs sont situés selon un même plan. Les deuxième à cinquième réflecteurs sont alors de préférence répartis autour du premier réflecteur.

De préférence, la source optique est une source laser.

Dans un tel système de métrologie comportant ainsi cinq réflecteurs, l'ensemble de détecteurs principal comporte alors un deuxième, un troisième, un quatrième et un cinquième détecteur nominal dont les positions correspondent chacune à un point d'éclairement par un faisceaux lumineux réfléchi par l'un des deuxième à cinquième réflecteurs lorsque le satellite secondaire est convenablement orienté angulairement par rapport au satellite de référence. Le circuit de mesure détecte alors la distance séparant chaque détecteur nominal d'un détecteur éclairé par la lumière réfléchie par le réflecteur correspondant du satellite secondaire. Ce circuit de mesure détermine ainsi l'écart angulaire du satellite secondaire par rapport à sa position nominale.

Selon une forme de réalisation, le satellite de référence possède, en outre, un premier dispositif semi réfléchissant interposé entre la source optique et la lentille de sortie pour dévier de la lumière réfléchie par le satellite secondaire vers l'ensemble de détecteurs principal.

Selon une variante de réalisation, le satellite de référence comporte un deuxième dispositif semi réfléchissant disposé entre la source optique et le premier dispositif semi réfléchissant. Un ensemble de détecteurs auxiliaire est ainsi susceptible d'être éclairé par la lumière réfléchie par le satellite secondaire. Le circuit de mesure peut commuter la détection de la distance séparant les détecteurs nominaux des détecteurs éclairés par la lumière réfléchie par le satellite secondaire à partir de l'ensemble de détecteur principal vers l'ensemble de détecteurs auxiliaire.

L'invention prévoir avantageusement de monter les réflecteurs sur des structures thermoélastiques stables.

Par ailleurs, l'invention prévoit que le satellite de référence peut comporter une horloge ainsi qu'un circuit de calcul de vitesse de dérive recevant du circuit de mesure différentes mesures de distances et calculant la vitesse de dérive du satellite secondaire par rapport au satellite de référence.

De manière similaire, le satellite de référence peut comporter un circuit de calcul d'accélération recevant, du circuit de calcul de vitesse, les vitesses de dérives ou, du circuit de mesure, différentes mesures de distances et calculant l'accélération de dérive à laquelle est soumis le satellite secondaire.

Selon une forme de réalisation avantageuse de l'invention, les deuxième à cinquième réflecteurs sont disposés symétriquement autour du premier réflecteur on prévoit un sixième réflecteur associé par exemple à l'un des deuxième à cinquième réflecteurs pour déterminer l'orientation angulaire du satellite secondaire.

Alternativement, selon une variante de réalisation on peut prévoir que les deuxième à cinquième réflecteurs ne sont pas disposés symétriquement par rapport au premier réflecteur.

L'invention concerne également un système de commande de positionnement de satellites en vol de formation appliquant le système de métrologie ainsi décrit. Le satellite de référence comporte alors une unité de contrôle:

- permettant de calculer les distances séparant les détecteurs nominaux des zones d'éclairement de l'ensemble de détecteurs par la lumière réfléchie par les réflecteurs du satellite secondaire,
- calculant un ou plusieurs ordres de commande d'orientation et de déplacement du satellite secondaire,
- transmettant cet ordre de commande au satellite secondaire, celui-ci comportant des circuits de commande permettant de commander des actuateurs de déplacement et d'orientation du satellite secondaire en fonction desdits ordres de commande.

L'invention concerne également un système d'égalisation de distances entre satellites appliquant le système de métrologie précédemment décrit. Dans ce système d'égalisation, le satellite de référence comporte:

- un anneau interférométrique,
- une source lumineuse permettant d'injecter un faisceau lumineux en un point d'injection de l'anneau interférométrique et celui-ci permettant de transmettre ce faisceau lumineux à deux satellites secondaires qui rétro réfléchissent la lumière qu'ils reçoivent vers l'anneau interférométrique,
- un détecteur couplé à une sortie de l'anneau interférométrique et mesurant les phases respectives des faisceaux lumineux réfléchis par les satellites secondaires,
- deux dispositifs d'égalisation de chemins optiques insérés dans deux bras de l'anneau interférométrique qui sont situés de part et d'autre du point d'injection de l'anneau interférométrique.

Selon une forme de réalisation préférée d'un tel système, les dispositifs d'égalisation comportent chacun un premier dispositif de réflexion insérant sur le trajet d'un bras de l'anneau interférométrique, un deuxième dispositif de réflexion mobile par rapport au premier dispositif de réflexion et permettant de rétro réfléchir la lumière vers le premier dispositif de réflexion.

BREVE DESCRIPTION DES FIGURES

Les différents objets et caractéristiques de l'invention apparaîtront plus clairement dans la description qui va suivre et dans les figures annexées qui représentent:

- la figure 1, un exemple de réalisation de base d'un système de métrologie de satellites pour le vol en formation de satellites,
- les figures 2a à 2c, un exemple de réalisation plus complet d'un tel système de métrologie,
- la figure 3, une variante de réalisation du système des figures 2a à 2c,
- la figure 4, une autre variante de réalisation du système selon l'invention,
- la figure 5, un système de commande appliquant le système de métrologie selon l'invention,
- la figure 6, un exemple de réalisation d'un système d'égalisation des distances optiques entre satellites.

DESCRIPTION DETAILLEE

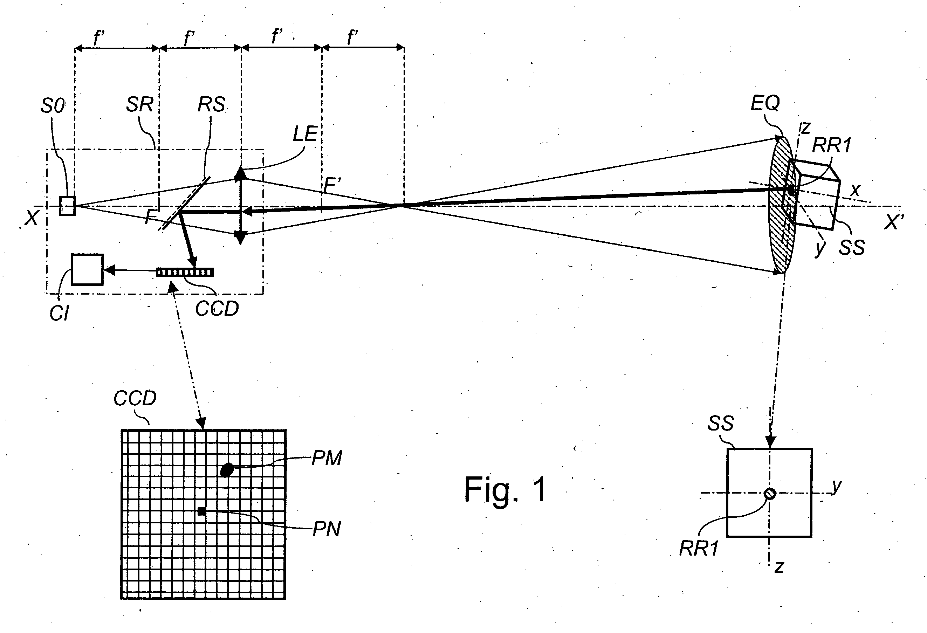

En se reportant à la figure 1, on va donc décrire un exemple de réalisation de base d'un système de métrologie applicable à un système de vol en formation de satellites.

A titre d'exemple, l'invention est décrite en considérant le cas deux satellites seulement mais l'invention est applicable à un système de vol en formation comprenant un plus grand nombre de satellites.

Sur la figure 1, le satellite de référence SR (satellite maître) comporte une source optique SO capable d'éclairer une face du satellite secondaire SS (satellite esclave).

Le faisceau d'éclairement issu de la source SO est transmis par une lentille LE de distance focale f' et située sensiblement à une distance 2f' de la source. La distance focale f' de la lentille est calculée de telle façon que l'ouverture du faisceau d'éclairement sera telle que la section EQ du faisceau permettra un éclairement de la face du satellite secondaire SS qui est orientée vers le satellite de référence. A titre d'exemple, l'angle d'ouverture du faisceau d'éclairement est de 15°.

Selon l'invention, il est également prévu que cette face du satellite secondaire comporte au moins un dispositif de réflexion RR1. Tout ou partie de la lumière du faisceau d'éclairement reçue par le réflecteur RR1 est réfléchie vers le satellite de référence.

Un dispositif semi réfléchissant RS est prévu entre la lentille LE et la source SO et permet d'aiguiller la lumière réfléchie par le satellite secondaire vers un ensemble de détecteurs tel qu'une matrice de détection CCD.

Le réflecteur RR1 occupe une place bien définie sur le satellite secondaire et cette place est connue du satellite de référence. Par exemple, le réflecteur est au centre de la face du satellite SS éclairée par le faisceau d'éclairement (voir figure 1).

Le faisceau réfléchi par le réflecteur RR1 éclaire une zone PM délimitée de la surface de la matrice de détection CCD. Dans ces conditions, si dans sa position normale, le satellite SS doit être aligné selon l'axe XX' et que dans cette position le faisceau réfléchi devait éclairer un détecteur PN, le satellite de référence est capable de mesurer la position du satellite par rapport à l'axe X en déterminant la distance séparant le détecteur PN de la zone éclairée PM.

On déterminera alors les mouvements correctifs à appliquer au satellite secondaire pour retrouver un alignement latéral parfait en appliquant la formule : $(T_x, T_y) = \varphi(X_{centroïd}, Y_{centroïd})$ dans laquelle:

Tx: correctif suivant l'axe X

Ty: correctif suivant l'axe Y

$X_{centroïd}$ : coordonnée suivant X de la zone éclairée PM (mesure)

$Y_{centroïd}$ : coordonnée suivant Y de la zone éclairée PM (mesure)

$\varphi$ : fonction linéaire affine (calibration)

Avantageusement, l'invention prévoit que le réflecteur RR1 est un rétro réflecteur de façon à ce qu'il réfléchisse le maximum de lumière vers la matrice de détection CCD.

Par ailleurs, la source lumineuse sera de préférence une source laser.

Le système de la figure 1 permet donc de mesurer la position du satellite secondaire SS par rapport à l'axe XX'.

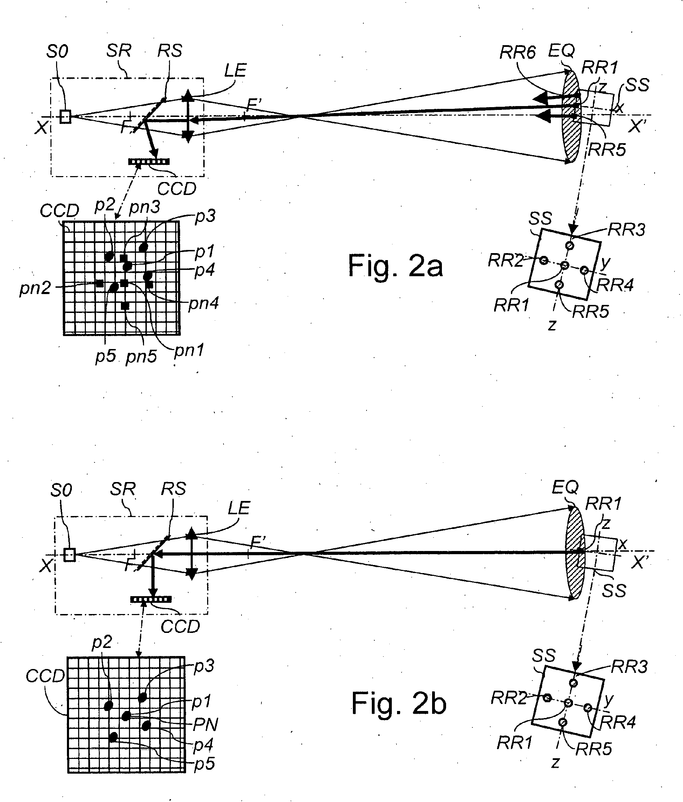

En se reportant aux figures 2a à 2c, on maintenant décrire le système de telle façon qu'il permette de mesurer l'inclinaison du satellite par rapport à l'axe XX' ainsi que son orientation angulaire autour de cet axe.

Pour cela, la face du satellite secondaire qui est éclairée par le faisceau d'éclairement venant du satellite de référence comporte quatre réflecteurs supplémentaires RR2, RR3, RR4, RR5 disposés de préférence autour du réflecteur RR1. Ces réflecteurs forment, par exemple une croix et sont de préférence placés selon un même plan zy.

Sur la figure 2a, le satellite SS est décalé par rapport à l'axe XX' et le plan des réflecteurs RR1 à RR5 est incliné par rapport à l'axe XX'. De plus, l'ensemble du satellite secondaire est décalé angulairement autour de l'axe XX' comme on peut le voir sur la représentation en plan des réflecteurs (en bas à droite de la figure 2a).

La lumière réfléchie (ou rétro réfléchie) par les réflecteurs (ou rétro réflecteurs) RR1, RR2, RR3, RR4, RR5 est retransmise à la matrice de détection CCD et donne lieu respectivement aux zones éclairées p1, p2, p3, p4, et p5.

La mesure du décalage latéral du satellite secondaire par rapport à l'axe XX' se fait, comme décrit précédemment, en mesurant la distance de la zone p1 par rapport à la position nominale pn1.

On déterminera alors les trois rotations correctives à appliquer au satellite secondaire pour retrouver une attitude parfaite en appliquant la formule matricielle :

$$\begin{pmatrix} \alpha \\ \beta \\ \gamma \end{pmatrix} = \begin{pmatrix} \varphi_1(X_{centro\text{ï}ds}, Y_{centro\text{ï}ds}) \\ \varphi_2(X_{centro\text{ï}ds}, Y_{centro\text{ï}ds}) \\ \varphi_3(X_{centro\text{ï}ds}, Y_{centro\text{ï}ds}) \end{pmatrix}$$

dans laquelle :

    $\alpha$: rotation corrective suivant l'axe X

    $\beta$: rotation corrective suivant l'axe Y

    $\gamma$ : rotation corrective suivant l'axe Z

    $X_{centro\text{ï}ds}$ : coordonnées suivant X de p2, p3, p4, p5 (mesures)

    $Y_{centro\text{ï}ds}$ : coordonnées suivant Y de p2, p3, p4, p5 (mesures)

    $\varphi1$, $\varphi2$, $\varphi3$ : fonctions linéaire affine (calibration)

A noter que p1 est alors confondu avec le détecteur pn1 comme cela a été décrit précédemment.

En supposant que, en fonction de cette mesure, le satellite secondaire SS soit ramené selon l'alignement de l'axe XX', on obtiendrait la situation représentée par la figure 2b.

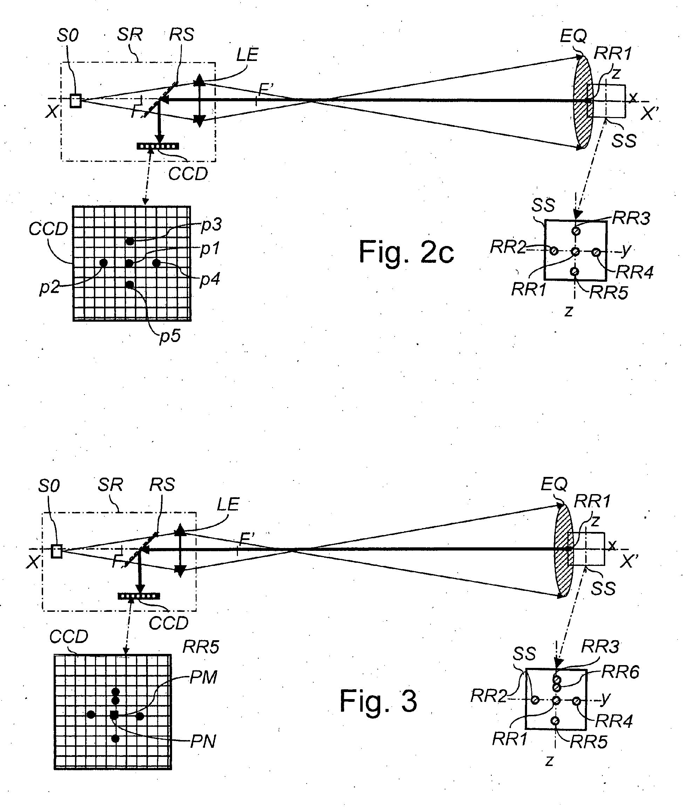

Il est alors possible d'identifier les positions respectives des zones éclairées p2 à p5 et de mesurer leurs distances par rapport aux positions nominales qu'elles devraient avoir si le satellite secondaire était bien orienté. Ces positions nominales np1 à np5 sont représentées en figure 2a. La figure 2c représente le système lorsque la position du satellite secondaire a été corrigée.

Dans le système des figures 2a à 2c, on a prévu cinq réflecteurs, mais sans sortir du cadre de l'invention, un tel système pourrait fonctionner avec trois réflecteurs seulement convenablement positionnés.

La figure 3 représente une variante de réalisation dans laquelle on prévoit un réflecteur supplémentaire RR6 associé à l'un des réflecteurs (le réflecteur RR3 sur la figure 3). Ce réflecteur donne une zone éclairée p6 qui associée avec la zone p3 permet aisément d'orienter angulairement le satellite secondaire.

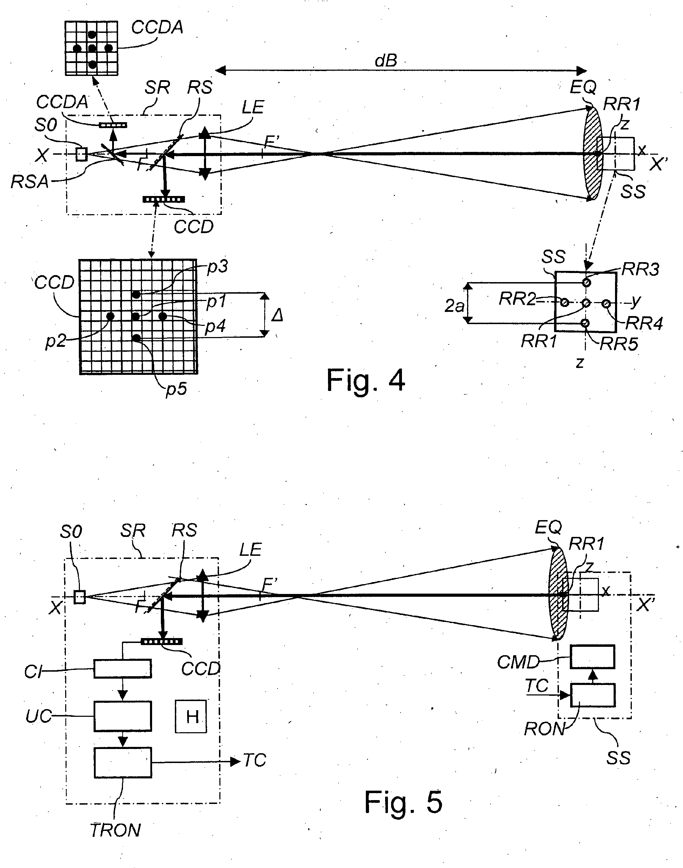

La figure 4 représente une variante de réalisation dans laquelle on a prévu une matrice de détection auxiliaire CCDA qui reçoit, par le dispositif semi réfléchissant RSA, une partie de la lumière réfléchie par les réflecteurs du satellite secondaire.

La matrice de détection CCD permet de mesurer les décalages latéral et angulaires lorsque ceux-ci sont relativement importants. Ensuite, lorsque la position et l'orientation du satellite secondaires ont été partiellement corrigées, le système peut fonctionner avec la matrice de détection auxiliaire CCDA qui est de taille plus réduite et qui permet une exploration plus rapide de la matrice et donc un fonctionnement plus rapide.

La figure 5 représente un système de commande permettant au satellite de référence de commander le satellite secondaire à l'aide des résultats des mesures effectuées avec le système des figures 1 à 4.

Le satellite de référence SR possède une unité de contrôle UC recevant d'un circuit de mesure CI (ou circuit d'exploration de la matrice de détection) les informations de la matrice de détection. L'unité de contrôle UC peut ainsi identifier les positions des zones éclairées (p1 à p5) et calculer leur décalage par rapport à leurs positions nominales respectives. L'unité de contrôle calcule des ordres de correction TC qui sont transmis par un circuit de transmission TRON à un circuit de réception RON du satellite secondaire.

Dans le satellite secondaire, le circuit de réception RON communique les ordres reçus à un ou des circuits de commande CMD qui commandent des actuateurs permettant de modifier la position et/ou l'orientation du satellite secondaire.

Le système de mesure de l'invention est ainsi basé sur la mesure de distance entre différents spots images (centroidisation) fournis par un réseau de rétro réflecteurs placés sur le satellite secondaire et éclairés par un faisceau laser divergent issu du satellite de référence.

La position du centroide issu du rétro réflecteur central (centre géométrique du réseau) assure la connaissance latérale.

De plus, les mesures de distances inter-centroides périphériques (p2 à p5) permettent de calculer la distance du satellite secondaire au satellite de référence en appliquant la formule:

$$d_B = f'\left(1 + \frac{2a}{\Delta Y}\right)$$

Dans laquelle:

- dB est la distance entre le satellite de référence (plan de la lentille LE) et le satellite secondaire,
- f' est la distance focale de la lentille LE,
- 2a est la distance qui sépare deux réflecteurs (RR3 et RR5 par exemple sur la figure 2c)
- $\Delta$ est la distance mesurée qui sépare deux positions nominales correspondant à ces réflecteurs (pn3 et pn5 par exemple.

Dans la description qui précède, on a réalisé une étape de centrage latéral du satellite secondaire de façon à amener la zone d'éclairement PM sur le détecteur PN (voir figure 1). Cependant, sans sortir du cadre de l'invention, la distance de base dB peut être estimée sans passer par une première étape de centrage latéral (PM en PN). Le décentrement peut être alors aisément compensé analytiquement par une formule plus généralisée.

Par ailleurs, le système de l'invention embarqué dans un satellite offre une facilité de redondance en insérant deux lames semi-réfléchissantes supplémentaires permettant de positionner une autre source optique et également au autre ensemble de détecteurs. Ainsi en cas de panne d'un de ces deux seuls composants actifs, la fonction métrologique reste complètement conservée.

Par ailleurs, une horloge H prévue dans le satellite de référence permet à l'unité de contrôle UC de calculer la vitesse de déplacement du satellite secondaire par rapport au satellite de référence (voire même son accélération) en faisant plusieurs mesures espacées dans le temps.

Dans certains systèmes, il est nécessaire d'égaliser les distances optiques entre différents satellites avec une très grande précision. Cela est impératif, par exemple dans les systèmes d'interférométrie où la précision d'égalisation des distances doit être de l'ordre du nanomètre.

Selon l'invention, on prévoit pour égaliser les distances entre un satellite de référence et des satellites secondaires d'égaliser deux à deux les chemins optiques d'un interféromètre de type Michelson utilisé en lumière blanche.

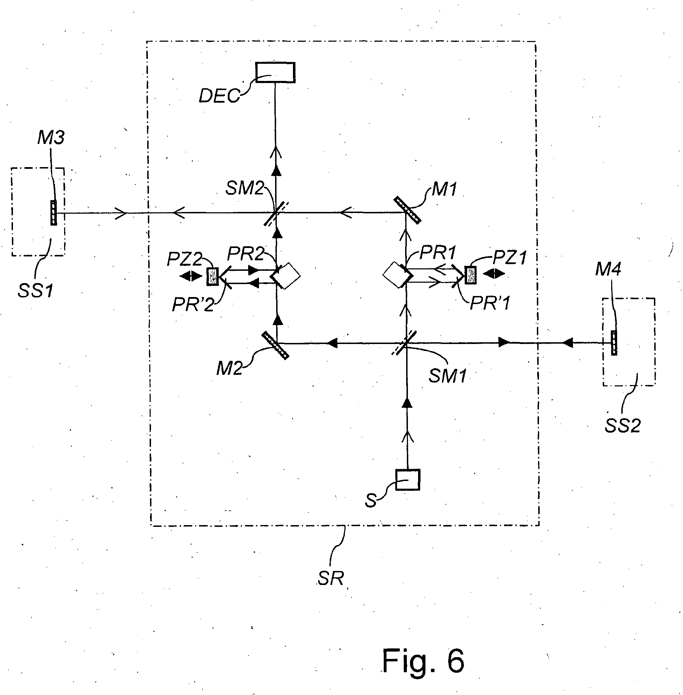

La figure 6 représente un tel système dans lequel le satellite de référence SR comporte un interféromètre de type Michelson réalisé avec deux miroirs semi réfléchissants SM1 et SM2 et deux miroirs M1 et M2.

Ce système permet d'égaliser les distances optiques entre deux satellites secondaires SS1 et SS2 et le satellite de référence SR. Le parcours de la lumière relatif au satellite secondaire SS1 est indiqué par des flèches en traits fins et le parcours de la lumière relatif au satellite secondaire SS2 est indiqué par des triangles noirs.

Le miroir semi réfléchissant SM1 permet d'injecter dans l'anneau interférométrique, un faisceau de lumière blanche fourni par une source de lumière S.

Dans deux bras de l'interféromètre situés de part et d'autre de ce miroir semi réfléchissant SM1 sont prévus des dispositifs d'égalisation de chemins optiques. A titre d'exemple de réalisation, ces dispositifs d'égalisation comportent chacun un premier dispositif de réflexion PR1, PR2 (des coins de cubes par exemple) en coupure dans un bras de l'interféromètre. Les dispositifs de réflexion PR1 et PR2 réfléchissent la lumière vers des deuxièmes dispositifs de réflexion PR'1 et PR'2 lesquels réfléchissent la lumière vers les dispositifs de réflexion PR1 et PR2 qui réinsère la lumière dans l'interféromètre. Les distances entre les dispositifs PR1 et PR'1 d'une part et entre PR2 et PR'2 d'autre part sont réglables séparément par déplacement des dispositifs PR'1 et PR'2. Pour cela, les dispositifs de réflexion PR'1 et PR'2 sont montés sur des dispositifs piézoélectriques qui permettent de déplacer les dispositifs PR'1 et PR'2 par rapport aux dispositifs PR1 et PR2.

Un détecteur DEC permet de détecter la mise en phase de la lumière transmise aux deux satellites secondaires SS1 et SS2. L'actionnement des dispositifs piézoélectriques PZ1 et PZ2 permet de contrôler cette mise en phase et de contrôler ainsi les longueurs des chemins optiques entre le satellite de référence et les satellites secondaires.

On voit donc que la connaissance de la différence des distances est finement assurée par des lignes à retard classiques (coin de cube mobile par commande piézoélectrique) qui permettent le centrage de la frange blanche (frange brillante) et donc le mouvement correcteur longitudinal à imposer aux satellites secondaires pour réaliser cette égalisation fine.

**Revendications**

1.  Système de métrologie de satellites pour le vol en formation de satellites comprenant un satellite de référence (SR) et au moins deux satellites secondaires (SS1, SS2), le satellite de référence (SR) comportant:

    - une source optique (SO) émettant un faisceau lumineux destiné à éclairer au moins en partie les satellites secondaires (SS),
    - un ensemble de détecteurs principal de lumière (CCD) capables de détecter de la lumière provenant des satellites secondaires,
    - un circuit de mesure (CI) permettant de détecter le ou les détecteurs qui reçoivent de la lumière des satellites secondaires,
    les satellites secondaires comportant au moins un premier réflecteur réfléchissant la lumière reçue du satellite de référence vers l'ensemble de détecteurs de lumière (CCD),
    **caractérisé en ce que** l'ensemble de détecteurs principal de lumière (CCD) est une matrice de détecteurs et **en ce qu'**il comporte des premiers détecteurs nominaux (PN, p1) correspondant au point d'éclairement de l'ensemble de détecteurs lorsque les satellites secondaires sont convenablement positionnés latéralement par rapport au satellite de référence, le circuit de mesure détectant la distance séparant ces détecteurs nominaux des détecteurs éclairés par la lumière réfléchie par les satellites secondaires déterminant ainsi le décentrement latéral des satellites secondaires par rapport à leur position nominale
    et **en ce que** le satellite de référence (SR) comporte un anneau interférométrique (SM1, M1, SM2, M2) pour égaliser les distances optiques entre le satellite de référence (SR) et les deux satellites secondaires (SS1, SS2), une source lumineuse (S) permettant d'injecter un faisceau lumineux en un point d'injection (SM1) dudit anneau et celui-ci permettant de transmettre ce faisceau lumineux aux deux satellites secondaires (SS1 et SS2) qui rétro réfléchissent la lumière qu'ils reçoivent vers l'anneau interférométrique, un détecteur couplé à une sortie de l'anneau interférométrique mesurant les phases respectives des faisceaux lumineux réfléchis, deux dispositifs d'égalisation de chemins optiques étant insérés dans deux bras de l'anneau interférométrique qui sont situés de part et d'autre du point d'injection (SM1) de l'anneau interférométrique.

2. Système de métrologie selon la revendication 1, **caractérisé en ce que** la source optique (SO) émet un faisceau lumineux divergent.

3. Système de métrologie selon la revendication 2, **caractérisé en ce qu'**il comporte une lentille de focalisation (LE) de sortie, la source optique (SO) étant située à une distance égale à deux fois la distance focale (f') de la lentille (LE).

4. Système de métrologie selon la revendication 3, **caractérisé en ce que** ledit réflecteur (RR1) est un rétro réflecteur.

5. Système de métrologie selon l'une quelconque des revendications précédentes, **caractérisé en ce que** le satellite secondaire comporte au moins trois réflecteurs (RR1 à RR5) chacun d'eux étant destiné à réfléchir la lumière provenant de la source optique (SO) vers l'ensemble de détecteurs principal (CCD) du satellite de référence.

6. Système de métrologie selon la revendication 5, **caractérisé en ce que** le satellite secondaire comporte un deuxième, un troisième, un quatrième et un cinquième réflecteurs (RR2, RR3, RR4, RR5), chacun d'eux étant destiné à réfléchir la lumière provenant de la source optique (SO) vers l'ensemble de détecteurs principal du satellite de référence.

7. Système de métrologie selon la revendication 6, **caractérisé en ce que** lesdits réflecteurs sont situés selon un même plan, les deuxième à cinquième réflecteurs (RR2 à RR5) étant répartis autour du premier réflecteur (RR1).

8. Système de métrologie selon la revendication 1, **caractérisé en ce que** la source optique est une source laser.

9. Système de métrologie selon la revendication 6, **caractérisé en ce que**:

   - l'ensemble de détecteurs principal (CCD) comporte un deuxième, un troisième, un quatrième et un cinquième détecteur nominal (pn2, pn3, pn4, pn5) dont les positions correspondent chacune à un point d'éclairement par un faisceaux lumineux réfléchi par l'un des deuxième à cinquième réflecteurs (RR2 à RR5) lorsque le satellite secondaire est convenablement orienté angulairement par rapport au satellite de référence,
et **en ce que** le circuit de mesure (CI) détecte la distance séparant chaque détecteur nominale (pn2, pn3, pn4, pn5) d'un détecteur éclairé par la lumière réfléchie par le réflecteur correspondant du satellite secondaire, ce circuit déterminant ainsi l'écart angulaire du satellite secondaire par rapport à sa position nominale.

10. Système de métrologie selon l'une quelconque des revendications 3 à 9, **caractérisé en ce que** le satellite de référence possède un premier dispositif semi réfléchissant (RS) interposé entre la source optique et la lentille de sortie pour dévier de la lumière réfléchie par le satellite secondaire vers l'ensemble de détecteurs principal (CCD).

11. Système de métrologie selon la revendication 11, **caractérisé en ce qu'**il comporte un deuxième dispositif semi réfléchissant (RSA) disposé entre la source optique et le premier dispositif semi réfléchissant, un ensemble de détecteurs auxiliaire (CCDA) susceptible d'être éclairé par la lumière réfléchie par le satellite secondaire, le circuit de mesure (CI) commutant la détection de la distance séparant les détecteurs nominaux des détecteurs éclairés par la lumière réfléchie par le satellite secondaire à partir de l'ensemble de détecteur principal (CCD) vers l'ensemble de détecteurs auxiliaire (CCDA).

12. Système de métrologie selon l'une quelconque des revendications précédentes, **caractérisé en ce que** les réflecteurs (RR1 à RR5) sont montés sur des structures thermoélastiques stables.

13. Système de métrologie selon l'une quelconque des revendications précédentes, **caractérisé en ce qu'**il comporte une horloge (H) ainsi qu'un circuit de calcul (UC) de vitesse de dérive recevant du circuit de mesure (CI) différentes mesures de distances et calculant la vitesse de dérive du satellite secondaire par rapport au satellite de référence.

14. Système de métrologie selon la revendication 13, **caractérisé en ce qu'**il comporte un circuit de calcul d'accélération recevant, du circuit de calcul de vitesse, les vitesses de dérives ou, du circuit de mesure, différentes mesures de distances et calculant l'accélération de dérive à laquelle est soumis le satellite secondaire.

15. Système de métrologie selon la revendication 13, **caractérisé en ce que** les deuxième à cinquième réflecteurs (RR2 à RR5) sont disposés symétriquement autour du premier réflecteur (RR1) et qu'il comporte un sixième réflecteur (RR6) associé à l'un des deuxième à cinquième réflecteurs pour déterminer l'orientation angulaire du satellite secondaire.

16. Système de métrologie selon la revendication 13, **caractérisé en ce que** les deuxième à cinquième réflecteurs (RR2 à RR5) ne sont pas disposés symétriquement par rapport au premier réflecteur (RR1);

17. Système de commande de positionnement de satellites en vol de formation comprenant le système de métrologie selon l'une quelconque des revendications précédentes, **caractérisé en ce que** le satellite de référence (SR) comporte une unité de contrôle:

    - permettant de calculer les distances séparant les détecteurs nominaux des zones d'éclairement de l'ensemble de détecteurs (CCD) par la lumière réfléchie par les réflecteurs du satellite secondaire,
    - calculant un ou plusieurs ordres (TC) de commande d'orientation et de déplacement du satellite secondaire,
    - transmettant cet ordre de commande au satellite secondaire, celui-ci comportant des circuits de commande (CMD) permettant de commander des actuateurs de déplacement et d'orientation du satellite secondaire en fonction desdits ordres de commande (TC).

18. Système de métrologie selon la revendication 1, **caractérisé en ce que** les dispositifs d'égalisation comportent chacun un premier dispositif de réflexion (PR1, PR2) insérant sur le trajet d'un bras de l'anneau interférométrique, un deuxième dispositif de réflexion (PR'1, PR'2) mobile par rapport au premier dispositif de réflexion et permettant de rétro réfléchir la lumière vers le premier dispositif de réflexion.


**Patentansprüche**

1. Satellitenmesssystem für in Formation fliegende Satelliten, die einen Referenzsatelliten (SR) und wenigstens zwei Sekundärsatelliten (SS1, SS2) umfassen, wobei der Referenzsatellit (SR) Folgendes umfasst:

    - eine Lichtquelle (SO), die einen Lichtstrahl emittiert, um die sekundären Satelliten (SS) wenigstens teilweise zu beleuchten;
    - einen Hauptsatz von Lichtdetektoren (CCD) zum Erkennen des von den sekundären Satelliten kommenden Lichts;
    - eine Messschaltung (CI), mit der der oder die Detektor(en) erkannt werden kann/können, der/die Licht von den sekundären Satelliten empfängt/empfangen,
wobei die sekundären Satelliten wenigstens einen ersten Reflektor umfassen, der das vom Referenzsatelliten empfangene Licht zu dem Satz von Lichtdetektoren (CCD) reflektiert,
**dadurch gekennzeichnet, dass** der Hauptsatz von Lichtdetektoren (CCD) eine Matrix von Detektoren ist, und dadurch, dass er erste Nenndetektoren (PN, pl) umfasst, die dem Beleuchtungspunkt des Satzes von Detektoren entsprechen, wenn die sekundären Satelliten lateral zum Referenzsatelliten geeignet positioniert sind, wobei die Messschaltung die Distanz zwischen den Nenndetektoren und den Detektoren erkennt, die von dem von den sekundären Satelliten reflektierten Licht beleuchtet werden, wodurch die laterale Dezentrierung der sekundären Satelliten in Bezug auf ihre Nennposition ermittelt wird,
und dadurch, dass der Referenzsatellit (SR) einen interferometrischen Ring (SM1, M1, SM2, M2) zum Ausgleichen der optischen Distanzen zwischen dem Referenzsatelliten (SR) und den zwei sekundären Satelliten (SS1, SS2) umfasst, wobei eine Lichtquelle (S) eine Injektion eines Lichtstrahls an einem Injektionspunkt (SM1) des Rings zulässt, wobei der Ring zulässt, dass dieser Lichtstrahl zu den zwei sekundären Satelliten (SS1, SS2) übertragen wird, die das von ihnen empfangene Licht zu dem interferometrischen Ring zurückreflektieren, wobei ein mit einem Ausgang des interferometrischen Rings gekoppelter Detektor die jeweiligen Phasen der reflektierten Lichtstrahlen misst, wobei zwei Lichtwegausgleichsvorrichtungen in zwei Arme des interferometrischen Rings eingeführt werden, die sich auf beiden Seiten des Injektionspunkts (SM1) des interferometrischen Rings befinden.

2. Messsystem nach Anspruch 1, **dadurch gekennzeichnet, dass** die Lichtquelle (SO) einen divergierenden Lichtstrahl emittiert.

3. Messsystem nach Anspruch 2, **dadurch gekennzeichnet, dass** es eine Ausgangsfokussierlinse (LE) umfasst, wobei sich die Lichtquelle (SO) in einer Distanz befindet, die das Zweifache der Brennweite (f') der Linse (LE) beträgt.

4. Messsystem nach Anspruch 3, **dadurch gekennzeichnet, dass** der Reflektor (RR1) ein Retroreflektor ist.

5. Messsystem nach einem der vorherigen Ansprüche, **dadurch gekennzeichnet, dass** der sekundäre Satellit wenigstens drei Reflektoren (RR1 bis RR5) umfasst, die jeweils zum Reflektieren des von der Lichtquelle (SO) kommenden Lichts zu dem Hauptsatz von Detektoren (CCD) des Referenzsatelliten ausgelegt ist.

6. Messsystem nach Anspruch 5, **dadurch gekennzeichnet, dass** der sekundäre Satellit einen zweiten, dritten, vierten und fünften Reflektor (RR2, RR3, RR4, RR5) umfasst, die jeweils zum Reflektieren des von der Lichtquelle (SO) kommenden Lichts zu dem Hauptsatz von Detektoren des Referenzsatelliten ausgelegt ist.

7. Messsystem nach Anspruch 6, **dadurch gekennzeichnet, dass** sich die Reflektoren auf einer selben Ebene befinden, wobei der zweite bis fünfte Reflektor (RR2 bis RR5) um den ersten Reflektor (RR1) herum verteilt sind.

8. Messsystem nach Anspruch 1, **dadurch gekennzeichnet, dass** die Lichtquelle eine Laserquelle ist.

9. Messsystem nach Anspruch 6, **dadurch gekennzeichnet, dass**:

   - der Hauptsatz von Detektoren (CCD) einen zweiten, dritten, vierten und fünften Nenndetektor (pn2, pn3, pn4, pn5) umfasst, deren Positionen jeweils einem Beleuchtungspunkt durch einen Lichtstrahl entsprechen, der von einem der zweiten bis fünften Reflektoren (RR2 bis RR5) reflektiert wird, wenn der sekundäre Satellit winkelmäßig zum Referenzsatelliten geeignet orientiert ist,
   und dadurch, dass die Messschaltung (CI) die Distanz zwischen jedem Nenndetektor (pn2, pn3, pn4, pn5) und einem Detektor erkennt, der von dem von dem entsprechenden Reflektor des sekundären Satelliten reflektierten Licht beleuchtet wird, wobei diese Schaltung so den Winkelversatz des sekundären Satelliten in Bezug auf seine Nennposition ermittelt.

10. Messsystem nach einem der Ansprüche 3 bis 9, **dadurch gekennzeichnet, dass** der Referenzsatellit eine erste teilreflektierende Vorrichtung (RS) zwischen der Lichtquelle und der Ausgangslinse umfasst, um von dem sekundären Satelliten reflektiertes Licht zu dem Hauptsatz von Detektoren (CCD) abzulenken.

11. Messsystem nach Anspruch 11, **dadurch gekennzeichnet, dass** es eine zwischen der Lichtquelle und der ersten teilreflektierenden Vorrichtung angeordnete zweite teilreflektierende Vorrichtung (RSA) und einen Satz von Zusatzdetektoren (CCDA) umfasst, der mit dem von dem sekundären Satelliten reflektierten Licht beleuchtet werden kann, wobei die Messschaltung (CI) die Erkennung der Distanz zwischen den Nenndetektoren und den Detektoren, die von dem durch den sekundären Satelliten reflektierten Licht beleuchtet werden, vom Hauptsatz von Detektoren (CCD) auf den Satz von Zusatzdetektoren (CCDA) umschaltet.

12. Messsystem nach einem der vorherigen Ansprüche, **dadurch gekennzeichnet, dass** die Reflektoren (RR1 bis RR5) an stabilen thermoelastischen Strukturen montiert sind.

13. Messsystem nach einem der vorherigen Ansprüche, **dadurch gekennzeichnet, dass** es einen Taktgeber (H) sowie eine Driftgeschwindigkeitsberechnungsschaltung (UC) umfasst, die verschiedene Distanzmesswerte von der Messschaltung (CI) empfängt und die Driftgeschwindigkeit des sekundären Satelliten in Bezug auf den Referenzsatelliten berechnet.

14. Messsystem nach Anspruch 13, **dadurch gekennzeichnet, dass** es eine Beschleunigungsberechnungsschaltung umfasst, die Driftgeschwindigkeiten von der Geschwindigkeitsberechnungsschaltung oder unterschiedliche Distanzmesswerte von der Messschaltung empfängt und die von dem sekundären Satelliten erfahrene Driftbeschleunigung berechnet.

15. Messsystem nach Anspruch 13, **dadurch gekennzeichnet, dass** der zweite bis fünfte Reflektor (RR2 bis RR5) symmetrisch um den ersten Reflektor (RR1) herum angeordnet sind, und dadurch, dass es einen sechsten Reflektor (RR6) umfasst, der mit einem der zweiten bis fünften Reflektoren assoziiert ist, um die Winkelorientierung des sekundären Satelliten zu ermitteln.

16. Messsystem nach Anspruch 13, **dadurch gekennzeichnet, dass** der zweite bis fünfte Reflektor (RR2 bis RR5) nicht symmetrisch in Bezug auf den ersten Reflektor (RR1) angeordnet sind.

17. System zum Steuern der Positionierung von in Formation fliegenden Satelliten, das das Messsystem nach einem der vorherigen Ansprüche umfasst, **dadurch gekennzeichnet, dass** der Referenzsatellit (SR) eine Steuereinheit umfasst zum:

   - Berechnen der Distanzen zwischen den Nenndetektoren und den Zonen des Satzes von Detektoren (CCD), die von dem von den Reflektoren des sekundären Satelliten reflektierten Licht beleuchtet werden;
   - Berechnen eines oder mehrerer Befehle (TC) zum Steuern der Orientierung und Bewegung des sekundären Satelliten;

- Senden dieses Steuerbefehls zu dem sekundären Satelliten, der Steuerschaltungen (CMD) zum Steuern von Aktuatoren zum Bewegen und Orientieren des sekundären Satelliten in Abhängigkeit von den Steuerbefehlen (TC) umfasst.

18. Messsystem nach Anspruch 1, **dadurch gekennzeichnet, dass** die Ausgleichsvorrichtungen jeweils eine erste Reflexionsvorrichtung (PR1, PR2) aufweisen, die am Pfad eines Arms des interferometrischen Rings eine zweite Reflexionsvorrichtung (PR'1, PR'2) eingeführt hat, die sich in Bezug auf die erste Reflexionsvorrichtung bewegen kann und es zulässt, dass das Licht zur ersten Reflexionsvorrichtung zurückreflektiert wird.

**Claims**

1. A satellite metrology system for satellites flying in formation, comprising a reference satellite (SR) and at least two secondary satellites (SS1, SS2), said reference satellite (SR) comprising:

> - an optical source (SO) emitting a light beam designed to at least partly illuminate said secondary satellites (SS);
> - a main set of light detectors (CCD) designed to detect light originating from said secondary satellites;
> - a measurement circuit (CI) for detecting the one or more detectors that receive light from said secondary satellites,
> said secondary satellites comprising at least one first reflector reflecting the light received from said reference satellite toward said set of light detectors (CCD),
> **characterised in that** said main set of light detectors (CCD) is a matrix of detectors and **in that** it comprises first nominal detectors (PN, p1) corresponding to the point of illumination of said set of detectors when said secondary satellites are suitably laterally positioned relative to said reference satellite, said measurement circuit detecting the distance separating said nominal detectors from the detectors illuminated by the light reflected by said secondary satellites, thus determining the lateral offset of said secondary satellites relative to their nominal position,
> and **in that** said reference satellite (SR) comprises an interferometric ring (SM1, M1, SM2, M2) for equalising the optical distances between said reference satellite (SR) and said two secondary satellites (SS1, SS2), a light source (S) allowing a light beam to be injected at an injection point (SM1) of said ring, with said ring allowing this light beam to be transmitted to said two secondary satellites (SS1 and SS2) that retro-reflect the light they receive toward said interferometric ring, with a detector coupled to an output of said interferometric ring measuring the respective phases of the reflected light beams, with two optical path equalisation devices being inserted in two arms of said interferometric ring that are located either side of said injection point (SM1) of said interferometric ring.

2. The metrology system according to claim 1, **characterised in that** said optical source (SO) emits a divergent light beam.

3. The metrology system according to claim 2, **characterised in that** it comprises an output focusing lens (LE), with said optical source (SO) being located at a distance that is equal to twice the focal distance (f') of said lens (LE).

4. The metrology system according to claim 3, **characterised in that** said reflector (RR1) is a retro-reflector.

5. The metrology system according to any one of the preceding claims, **characterised in that** said secondary satellite comprises at least three reflectors (RR1 to RR5), with each of said reflectors being designed to reflect light originating from said optical source (SO) toward said main set of detectors (CCD) of said reference satellite.

6. The metrology system according to claim 5, **characterised in that** said secondary satellite comprises a second, a third, a fourth and a fifth reflector (RR2, RR3, RR4, RR5), with each of said reflectors being designed to reflect light originating from said optical source (SO) toward said main set of detectors of said reference satellite.

7. The metrology system according to claim 6, **characterised in that** said reflectors are located along the same plane, with said second to fifth reflectors (RR2 to RR5) being distributed around said first reflector (RR1).

8. The metrology system according to claim 1, **characterised in that** said optical source is a laser source.

9. The metrology system according to claim 6, **characterised in that**:

> - said main set of detectors (CCD) comprises a second, a third, a fourth and a fifth nominal detector (pn2, pn3, pn4, pn5), the positions of which each correspond to a point of illumination by a light beam reflected by one of said second to fifth reflectors (RR2 to RR5) when said secondary satellite is suitably angularly oriented relative to said reference satellite,

and **in that** said measurement circuit (CI) detects the distance separating each nominal detector (pn2, pn3, pn4, pn5) from a detector illuminated by the light reflected by the corresponding reflector of said secondary satellite, said circuit thus determining the angular offset of said secondary satellite relative to its nominal position.

10. The metrology system according to any one of claims 3 to 9, **characterised in that** said reference satellite has a first semi-reflecting device (RS) interposed between said optical source and said output lens so as to deflect light reflected by said secondary satellite toward said main set of detectors (CCD).

11. The metrology system according to claim 11, **characterised in that** it comprises a second semi-reflecting device (RSA) disposed between said optical source and said first semi-reflecting device, a set of auxiliary detectors (CCDA) designed to be illuminated by the light reflected by said secondary satellite, said measurement circuit (CI) switching the detection of the distance separating said nominal detectors from the detectors illuminated by the light reflected by said secondary satellite from said main set of detectors (CCD) to said set of auxiliary detectors (CCDA).

12. The metrology system according to any one of the preceding claims, **characterised in that** said reflectors (RR1 to RR5) are mounted on stable thermoelastic structures.

13. The metrology system according to any one of the preceding claims, **characterised in that** it comprises a clock (H) and a drift velocity calculation circuit (UC) receiving different distance measurements from said measurement circuit (CI) and calculating the drift velocity of said secondary satellite relative to said reference satellite.

14. The metrology system according to claim 13, **characterised in that** it comprises an acceleration calculation circuit receiving drift velocities from said velocity calculation circuit or different distance measurements from said measurement circuit and calculating the drift acceleration experienced by said secondary satellite.

15. The metrology system according to claim 13, **characterised in that** said second to fifth reflectors (RR2 to RR5) are symmetrically disposed around said first reflector (RR1) and **in that** it comprises a sixth reflector (RR6) associated with one of said second to fifth reflectors in order to determine the angular orientation of said secondary satellite.

16. The metrology system according to claim 13, **characterised in that** said second to fifth reflectors (RR2 to RR5) are not symmetrically disposed relative to said first reflector (RR 1).

17. A system for controlling the positioning of satellites flying in formation comprising the metrology system according to any one of the preceding claims, **characterised in that** said reference satellite (SR) comprises a control unit for:

- calculating the distances separating said nominal detectors from the zones of said set of detectors (CCD) illuminated by the light reflected by the reflectors of said secondary satellite;
- calculating one or more commands (TC) for controlling the orientation and displacement of said secondary satellite;
- transmitting this control command to said secondary satellite, which comprises control circuits (CMD) for controlling actuators for displacing and orienting said secondary satellite as a function of said control commands (TC).

18. The metrology system according to claim 1, **characterised in that** said equalisation devices each comprise a first reflection device (PR1, PR2) having inserted on the path of an arm of said interferometric ring, a second reflection device (PR'1, PR'2) that can move in relation to said first reflection device and allows light to be retro-reflected toward said first reflection device.

Fig. 1

EP 1 873 556 B1

Fig. 2a

Fig. 2b

Fig. 2c

Fig. 3

Fig. 4

Fig. 5

Fig. 6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Recent advances and low cost concept for the gamma-ray lens project MAX. *EXPERIMENTAL ASTRONOMY,* Décembre 2005, vol. 20, 455-464